# EUROPEAN PATENT APPLICATION

(11) **EP 4 428 707 A1**
(43) Date of publication of application: **11.09.2024**
(21) Application number: 23787511.7
(22) Date of filing: 29.03.2023
(51) Int. Cl.: G06F 16/182

(54) **INFORMATION STORAGE METHOD AND APPARATUS**

(30) Priority: 14.04.2022 CN 202210390559
(71) Applicant: BEIJING BYTEDANCE NETWORK TECHNOLOGY CO., LTD., Beijing 100041 (CN)
(72) Inventor: GU, Yifan, Beijing 100028 (CN); JIA, Ning, Beijing 100028 (CN)
(74) Representative: Dentons UK and Middle East LLP
(86) International application number: PCT/CN2023/084618
(87) International publication number: WO 2023/197865

(57) **Abstract**

Provided in the present disclosure are an information storage method and apparatus. The method comprises: first, acquiring a plurality of pieces of target data to be stored, wherein the target data includes a plurality of groups of key-value pair data; then, on the basis of an arrangement sequence of the plurality of pieces of target data, generating a first column-type storage file that stores key data included in each piece of target data; and then, on the basis of the arrangement sequence of the plurality of pieces of target data, generating a second column-type storage file that stores value data included in each piece of target data, wherein first position information, in the first column-type storage file, of the key data in any piece of target data is the same as second position information, in the second column-type storage file, of the value data corresponding to the key data. In the embodiments of the present disclosure, by means of respectively storing key data and value data in a first column-type storage file and a second column-type storage file, a large amount of key-value pair data may be stored by using the two column-type storage files, such that data loss caused by an excessive number of storage files can be avoided, thereby preventing a reduction in writing performance.

## Description

The present disclosure claims the priority from the CN patent application No. 202210390559.4 filed with the China National Intellectual Property Administration on April 14, 2022, the disclosure of which is incorporated herein by reference in its entirety.

### FIELD

Embodiments of the present disclosure generally relate to the field of computers, and more specifically, to a method and an apparatus for information storage.

### BACKGROUND

Online Analytical Processing (OLA) refers to processing data from multiple different dimensions for in-depth analysis. In order to reduce the scanning range of data during dimension queries and the size thereof during data transmission, the column storage solution is typically employed for storing the data, and respective columns are scanned for data filtering during online analysis. A key-value pair is a type of data formed by a key and a corresponding value. During the OLAP, when the pairs of key-value data are processed, it is straightforward to use the key as the column name, and the value as the value of the row corresponding to the data, where each column corresponds to a storage file for storing values of multiple pieces of data under the key. In this storage method, every time when a new key appears in the data, a column storage file corresponding to the key will be created. As the number of the keys grows, the data storage system needs to maintain more files, affecting the data writing efficiency. Moreover, if the number of files exceeds an upper limit, system abnormality may occur, resulting in data loss.

### SUMMARY

Embodiments of the present disclosure at least provide a method and an apparatus for information storage.

In a first aspect, the embodiments of the present disclosure provide a method of information storage, comprising: obtaining a plurality of pieces of target data, the target data including a plurality of pairs of key-value data; generating, based on an order of the plurality of pieces of target data, a first column storage file that stores key data included in each piece of target data; and generating, based on the order of the plurality of pieces of target data, a second column storage file that stores value data included in each piece of target data; wherein first position information of key data of each piece of the target data in the first column storage file is same as second position information of corresponding value data in the second column storage file.

In an alternative implementation, generating, based on the order of the plurality of pieces of target data, the first column storage file that stores the key data included in each piece of target data comprises: determining a number of data rows of the first column storage file based on a total number of the plurality of pieces of target data; determining a number of data columns of the first column storage file based on a maximum number of the pairs of key-value data included in a piece of target data among the plurality of pieces of target data; generating the first column storage file based on the number of data rows and the number of data columns of the first column storage file; and storing, based on the order of the plurality of pieces of target data, key data corresponding to each piece of target data sequentially into the first column storage file, such that key data stored in each row in the first column storage file are from a same piece of target data, and each cell in each row stores at most one piece of key data.

In an alternative implementation, generating, based on the order of the plurality of pieces of target data, the second column storage file that stores the key data included in each piece of target data comprises: determining a number of data rows of the second column storage file based on a total number of the plurality of pieces of target data; determining a number of data columns of the second column storage file based on a maximum number of the pairs of key-value data included in a piece of target data among the plurality of pieces of target data; generating the second column storage file based on the number of data rows and the number of data columns of the second column storage file; and storing, based on the order of the plurality of pieces of target data, value data corresponding to each piece of target data sequentially into the second column storage file, such that value data stored in each row in the second column storage file is from a same piece of target data, and each cell in each row stores at most one piece of value data.

In an alternative implementation, the method further comprises: in response to a data adding instruction, obtaining new data to be added, the new data including a plurality of pairs of key-value data; adding the new data to an end of the plurality of pieces of target data in order; and adding key data included in the new data to an end of the first column storage file, and adding the value data included in the new data to an end of the second column storage file.

In an alternative implementation, the method further comprises: in response to a data query instruction of an online analytical processing platform, determining a data type of the data query instruction; querying position information of key data that match the data type in the first column storage file; and querying, based on the position information, data matching the data query instruction in the second column storage file.

In an alternative implementation, querying, based on the position information, the data matching the data query instruction in the second column storage file comprises: retrieving, from the second column storage file, value data matching the position information as the data matching the data query instruction.

In an alternative implementation, the method further comprises: performing aggregation analysis on queried data to determine at least one of an occurrence number and an occurrence proportion of each piece of value data in the queried data; and presenting the at least one of the occurrence number and the occurrence proportion through the online analytical processing platform.

In a second aspect, the embodiments of the present disclosure further provide an information storage apparatus, comprising: an obtaining module for obtaining a plurality of pieces of target data, the target data including a plurality of pairs of key-value data; a first generation module for generating, based on an order of the plurality of pieces of target data, a first column storage file that stores key data included in each piece of target data; and a second generation module for generating, based on the order of the plurality of pieces of target data, a second column storage file that stores value data included in each piece of target data; wherein first position information of key data of each piece of the target data in the first column storage file is same as second position information of corresponding value data in the second column storage file.

In an alternative implementation, when generating, based on the order of the plurality of pieces of target data, the first column storage file that stores the key data included in each piece of target data, the first generation module is configured to: determine a number of data rows of the first column storage file based on a total number of the plurality of pieces of target data; determine a number of data columns of the first column storage file based on a maximum number of the pairs of key-value data included in a piece of target data among the plurality of pieces of target data; generate the first column storage file based on the number of data rows and the number of data columns of the first column storage file; and store, based on the order of the plurality of pieces of target data, key data corresponding to each piece of target data sequentially into the first column storage file, such that key data stored in each row in the first column storage file are from a same piece of target data, and each cell in each row stores at most one piece of key data.

In an alternative implementation, generating, based on the order of the plurality of pieces of target data, the second column storage file that stores the key data included in each piece of target data, the second generation module is configured to: determine a number of data rows of the second column storage file based on a total number of the plurality of pieces of target data; determine a number of data columns of the second column storage file based on a maximum number of the pairs of key-value data included in a piece of target data among the plurality of pieces of target data; generate the second column storage file based on the number of data rows and the number of data columns of the second column storage file; and store, based on the order of the plurality of pieces of target data, value data corresponding to each piece of target data sequentially into the second column storage file, such that value data stored in each row in the second column storage file is from a same piece of target data, and each cell in each row stores at most one piece of value data.

In an alternative implementation, the apparatus further comprises an adding module configured to: in response to a data adding instruction, obtain new data to be added, the new data including a plurality of pairs of key-value data; add the new data to an end of the order of the plurality of pieces of target data; and add key data included in the new data to an end of the first column storage file, and adding the value data included in the new data to an end of the second column storage file.

In an alternative implementation, the apparatus further comprises a query module configured to: in response to a data query instruction of an online analytical processing platform, determine a data type of the data query instruction; query position information of key data that match the data type in the first column storage file; and query, based on the position information, data matching the data query instruction in the second column storage file.

In an alternative implementation, when querying, based on the position information, the data matching the data query instruction in the second column storage file, the query module is configured to: retrieve, from the second column storage file, value data matching the position information as the data matching the data query instruction.

In an alternative implementation, the apparatus further comprises an analysis module configured to: perform aggregation analysis on queried data to determine at least one of an occurrence number and an occurrence proportion of each piece of value data in the queried data; and present the at least one of the occurrence number and the occurrence proportion through the online analytical processing platform.

In a third aspect, the embodiments of the present disclosure further provide an electronic device, comprising: a processor, a memory and a bus, wherein the memory stores machine readable instructions executable by the processor, the processor and the memory communicate with each other via the bus when the electronic device is running, and the machine readable instructions, when executed by the processor, perform the steps of the first aspect, or the steps in any one possible implementation of the first aspect.

In a fourth aspect, the embodiments of the present disclosure further provide a computer readable storage medium having computer programs stored thereon, wherein the computer programs, when executed by a processor, perform the steps of the first aspect, or the steps in any one possible implementation of the first aspect.

In a fifth aspect, the embodiments of the present disclosure still further provide a computer program product having program code carried thereon, wherein instructions included in the program code are applicable to perform the steps of the first aspect, or the steps in any one possible implementation of the first aspect.

The method and apparatus for information storage provided by the embodiments of the present disclosure can implement the following steps: obtaining a plurality of pieces of target data, where the target data includes multiple pairs of key-value data; generating, based on the order of the plurality of pieces of target data, a first column storage file that stores the key data included in each piece of target data; and generating, based on the order of the plurality of pieces of target data, a second column storage file that stores the value data included in each piece of target data. The first position information of the key data of each piece of target data in the first column storage file is the same as the second position information of the corresponding value data in the second column storage file. In the present embodiments, storing the key data and corresponding value data separately in the first and second column storage files enables the storage of a vast amount of key-value data using just two column storage files. This approach effectively mitigates the risk of data loss stemming from bulky storage files, thereby safeguarding against any degradation in writing performance.

In order to make the above objective, features and advantages of the present disclosure more apparent, description of optimal embodiments will be detailed below with reference to the drawings.

### BRIEF DESCRIPTION OF THE DRAWINGS

In order to describe more clearly the technical solution according to the embodiments of the present disclosure, brief description of the drawings required in the respective embodiments will be provided below, where the drawings, which are incorporated into the Description and constitute a part thereof, illustrate embodiments consistent with the present disclosure and are used, together with the Description, to explain the technical solution of the present disclosure. It would be appreciated that the drawings below only illustrate some embodiments and thus should not be construed as limiting the scope, on the basis of which the ordinary skilled in the art could derive other related drawings, without doing creative work.
Fig. 1 illustrates a flowchart of a data structure provided by embodiments of the present disclosure;
Fig. 2 illustrates a schematic diagram of a column storage file provided by embodiments of the present disclosure;
Fig. 3 illustrates a flowchart of an information storage method provided by embodiments of the present disclosure;
Fig. 4 illustrates a schematic diagram of another column storage file provided by embodiments of the present disclosure;
Fig. 5 illustrates a schematic diagram of an information storage apparatus provided by embodiments of the present disclosure; and
Fig. 6 illustrates a schematic diagram of an electronic device provided by embodiments of the present disclosure.

### DETAILED DESCRIPTION OF EMBODIMENTS

In order to make the objective, the technical solution and the advantages of the embodiments of the present disclosure more apparent, reference below will be made to the drawings of the embodiments of the present disclosure to describe clearly and completely the technical solution according to the embodiments of the present disclosure. Apparently, the embodiments described herein are only part of the embodiments of the present disclosure, rather than all of them. Components according to the embodiments of the present disclosure, as depicted and shown in the drawings, may be arranged and designed in various different configurations. Therefore, the description of the embodiments of the present disclosure detailed with reference to the drawings only involves selected embodiments of the present disclosure, without suggesting any limitation to the scope of the present disclosure. On the basis of the embodiments of the present disclosure, those skilled in the art could derive other embodiments, without doing creative work, which all fall into the protection scope of the present disclosure.

It is to be noted that similar references and alphabets represent similar terms in the drawings. Therefore, once a term is defined in one drawing, there is no need for further defining and explaining the same in the following drawings.

The term "and/or" is only used here to describe an association, indicating three possible relationships. For example, A and/or B may indicate: A exists alone, A and B exist simultaneously, or B exists alone. In addition, the term "at least one" used here indicates any one, or at least any two, of a plurality of combinations. For example, at least one of A, B and C may indicate any one or more elements selected from a set including A, B and C.

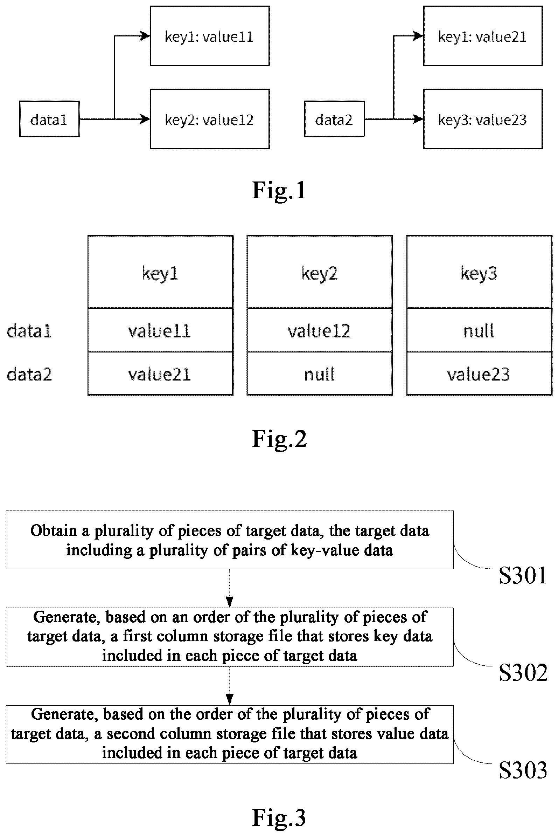

Through investigation, it is found that the data storage system employed in online analytical processing generally stores data in a column storage manner. Fig. 1 illustrates a schematic diagram of a data structure provided by embodiments of the present disclosure, where two pieces of data are shown, specifically data1 including a key-value pair "key1: value11" and a key-value pair "key2: value12," and data2 including a key-value pair "key1: value21" and a key-value pair "key: value23." Typically, the data storage system generates a column storage file for each piece of key data "key." Fig. 2 illustrates a schematic diagram of a column storage file provided by the embodiments of the present disclosure. A plurality of column storage files shown in Fig. 2 is storage results of the data structure shown in Fig. 1, which respectively correspond to the key data key1, key2, and key3, where each column storage file has stored therein key data corresponding to the column, and value data of data1 and data2 under the key data. It can be seen that, if a large amount of different key data is contained in the data to be stored, massive column storage files will be generated. In the storage method, when the number of the keys grows, the data storage system needs to maintain more files, affecting the data writing efficiency. Moreover, if the number of files exceeds an upper limit, system abnormality may occur, resulting in data loss.

In view of this, the present disclosure provides a method and an apparatus for information storage. By storing the key data and the value data respectively in the first column storage file and the second column storage file, a large amount of key-value data can be stored using only two column storage files, and data loss caused by bulky storage files can be avoided, thus preventing deterioration in writing performance.

For the sake of understanding of these embodiments, detailed description will be made to the information storage method according to embodiments of the present disclosure, where information storage method may generally be performed by a computer device with a certain computing capability. In some possible implementations, the information storage method can be implemented by a processor executing computer readable instructions stored in a memory.

Fig. 3 illustrates a flowchart of the information storage method provided by the embodiments of the present disclosure, including steps S301 through S303.

The method comprises, at S301, obtaining a plurality of pieces of target data, the target data including a plurality of pairs of key-value data. Each piece of target data may include a plurality of key-value pairs, the key-value pairs of different target data may have the same key data, or have the same value data. For example, in the data structure shown in Fig. 1, data1 includes the key data of key 1 and key 2, and data2 includes the key data of key 1 and key 3, where both of data1 and data2 include key1.

The method further comprises, at S302, generating, based on an order of the plurality of pieces of target data, a first column storage file that stores key data included in each piece of target data.

In this step, the order of the plurality of pieces of target data may be an order of acquiring the target data, or an order obtained by sorting features of the respective target data; according to the order, the key data included in the respective target data are stored in a column table, to obtain a first column storage file.

By way of example, a number of data rows of the first column storage file is determined based on a total number of the plurality of pieces of target data. For example, if the total number of the target data is 10, the number of data rows of the first column storage file may be 10, 11 or the like. If the number of data rows is 10, each row may correspond to a piece of target data; if the number of data rows is 11, identification information corresponding to the first column storage file can be stored in the first row, for characterizing that the first column storage file is used to store the key data. In each row of the first column storage file, key data included in the corresponding target data can be stored, where each piece of the stored key data may occupy a cell. A number of cells in each row (i.e., a number of data columns of the row) can be determined based on a maximum number of the pairs of key-value data included in a piece of target data among the plurality of pieces of target data. For example, if there are stored currently two pieces of target data which respectively include two pairs of key-value data and three pairs of key-value data, the number of data columns of the first column storage file can be set to 3.

After the number of data rows and the number of data columns are determined, the first column storage file matching the number of data rows and the number of data columns is generated. Then, key data corresponding to the corresponding pieces of target data may be stored sequentially into the first column storage file, such that key data stored in each row in the first column storage file are from a same piece of target data, and each cell in each row stores at most a one piece of value data.

The method further comprises, at S303, generating, based on the order of the plurality of pieces of target data, a second column storage file that stores value data included in each piece of target data.

Similar as S302, this step may include: determining a number of data rows of the second column storage file based on a total number of the plurality of pieces of target data; determining a number of data columns of the second column storage file based on a maximum number of the pairs of key-value data included in a piece of target data among the plurality of pieces of target data; generating the second column storage file based on the number of data rows and the number of data columns of the second column storage file; and storing, based on the order of the plurality of pieces of target data, value data corresponding to each piece of target data sequentially into the second column storage file, such that value data stored in each row in the second column storage file is from a same piece of target data, and each cell in each row stores at most one piece of value data.

In this way, in the first column storage file and the second column storage file generated in the above-mentioned steps, first position information of key data of any piece of the target data in the first column storage file is same as second position information of corresponding value data in the second column storage file. Therefore, once the position information of a certain piece of key data in the first column storage file is determined, value data corresponding to the key data can be retrieved from the second column storage file using the position information, or the target data needed can be directly retrieved based on the number of data rows through a query operation.

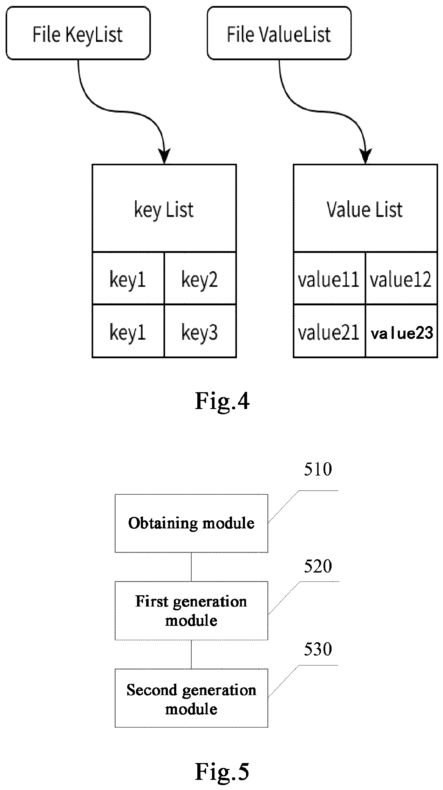

Fig. 4 illustrates a schematic diagram of another column storage file provided by the embodiments of the present disclosure. In the key list file File KeyList (i.e., the first column storage file described above) having key data stored therein, as shown in Fig. 4, there are three rows of data in total, where the first row of data are identifiers of the key data list, the second row of data are key data "key 1" and "key2" included in the data1 in the data structure as shown in Fig. 1, and the third row of data are key data "key 1" and "key3" included in the data2 as shown in Fig. 1. Likewise, in the value list file File ValueList (i.e., the second column storage file described above) having value data stored therein, there are three rows of data in total, where the first row of data are identifiers of the value data list, the second row of data are value data "value11" and "value12" included in the data1 in the data structure as shown in Fig. 1, and the third row of data are value data "value21" and "value23" included in the data2 as shown in Fig. 1.

Further, when new target data are to be stored, the obtained first column storage file and second column storage file are updated, specifically: in response to a data adding instruction, obtaining new data to be added, where the new data include a plurality of pairs of key-value data; adding the new data to an end of the order of the plurality of pieces of target data; and adding key data included in the new data to an end of the first column storage file, and adding the value data included in the new data to an end of the second column storage file, to thus achieve data addition.

After the first column storage file and the second column storage file are obtained, data query can be performed through an online analytical processing platform. The user can input a data query instruction through the online analytical processing platform, where the data query instruction indicates a data type to be queried. Based on the data type, key data matching the data type can be determined, the key data of the data type can be queried from the first column storage file, and the position information of the retrieved key data in the first column storage file can be determined. Then, the data matching the data query instruction is queried from the second column storage file based on the obtained position information. Since the position information of the key data in the first column storage file is the same as the position information of the corresponding value data in the second column storage file, value data matching the position information are retrieved from the second column storage file, as the data matching the data query instruction.

The data type may be used to characterize the key data to be queried, and the value range of the key data to be queried. For example, the data type may be "data having key data key 1, and value data greater than or equal to 10." As such, the first column storage file is searched for key1, and the position information corresponding to the key 1 is determined. Then, whether the corresponding value data in the second column storage file are greater than or equal to 10 is determined. If yes, the value data are used as the data matching the data query instruction.

After the required data are queried, aggregation analysis may be performed on the queried data to determine at least one of an occurrence number and/or an occurrence proportion of each piece of value data in the queried data; then, the at least one of the occurrence number and the occurrence proportion is presented through the online analytical processing platform. Wherein, the occurrence proportion may be a proportion of the occurrence number to the total amount of target data.

The information storage method provided by the embodiments of the present disclosure includes: obtaining a plurality of pieces of target data, the target data including a plurality of pairs of key-value data; generating, based on an order of the plurality of pieces of target data, a first column storage file that stores key data included in each piece of target data; and generating, based on the order of the plurality of pieces of target data, a second column storage file that stores value data included in each piece of target data; where first position information of key data of each piece of the target data in the first column storage file is same as second position information of corresponding value data in the second column storage file. In the embodiments of the present disclosure, by storing the key data and the value data respectively in the first column storage file and the second column storage file, a large amount of key-value data can be stored only using two column storage files, and data loss caused by bulky storage files can be avoided, thus preventing deterioration in writing performance.

It would be appreciated by those skilled in the art that, in the above method according to the implementations, the order of the respective steps, which is not a strict execution order, does not formulate any limitation to the implementation process, and the specific execution order of the respective steps should be determined depending on the functions and the possible internal logic thereof.

Based on the same invention conception, the embodiments of the present disclosure further provide an information storage apparatus corresponding to the information storage method. Since the apparatus according to the embodiments of the present disclosure is similar to the information storage method described above in terms of the principle for solving the problem, see the implementation of the method for details which are omitted here for brevity.

Fig. 5 illustrates a schematic diagram of an information storage apparatus provided by embodiments of the present disclosure. The apparatus includes: an obtaining module 510 for obtaining a plurality of pieces of target data, the target data including a plurality of pairs of key-value data; a first generation module 520 for generating, based on an order of the plurality of pieces of target data, a first column storage file that stores key data included in each piece of target data; and a second generation module 530 for generating, based on the order of the plurality of pieces of target data, a second column storage file that stores value data included in each piece of target data. The first position information of key data of each piece of the target data in the first column storage file may be same as second position information of corresponding value data in the second column storage file.

The information storage apparatus provided by the embodiments of the present disclosure can be used to: obtain a plurality of pieces of target data, the target data including a plurality of pairs of key-value data; generate, based on an order of the plurality of pieces of target data, a first column storage file that stores key data included in each piece of target data; and generate, based on the order of the plurality of pieces of target data, a second column storage file that stores value data included in each piece of target data; where first position information of key data of each piece of the target data in the first column storage file is same as second position information of corresponding value data in the second column storage file. In the embodiments of the present disclosure, by storing the key data and the value data respectively in the first column storage file and the second column storage file, a large amount of key-value data can be stored using two column storage files, and data loss caused by bulky storage files can be avoided, thus preventing deterioration in writing performance.

In an alternative implementation, when generating, based on the order of the plurality of pieces of target data, the first column storage file that stores the key data included in each piece of target data, the first generation module 520 is configured to: determine a number of data rows of the first column storage file based on a total number of the plurality of pieces of target data; determine a number of data columns of the first column storage file based on a maximum number of the pairs of key-value data included in a piece of target data among the plurality of pieces of target data; generate the first column storage file based on the number of data rows and the number of data columns of the first column storage file; and store, based on the order of the plurality of pieces of target data, key data corresponding to each piece of target data sequentially into the first column storage file, such that key data stored in each row in the first column storage file are from a same piece of target data, and each cell in each row stores at most one piece of key data.

In an alternative implementation, generating, based on the order of the plurality of pieces of target data, the second column storage file that stores the key data included in each piece of target data, the second generation module 530 is configured to: determine a number of data rows of the second column storage file based on a total number of the plurality of pieces of target data; determine a number of data columns of the second column storage file based on a maximum number of the pairs of key-value data included in a piece of target data among the plurality of pieces of target data; generate the second column storage file based on the number of data rows and the number of data columns of the second column storage file; and store, based on the order of the plurality of pieces of target data, value data corresponding to each piece of target data sequentially into the second column storage file, such that value data stored in each row in the second column storage file is from a same piece of target data, and each cell in each row stores at most one piece of value data.

In an alternative implementation, the apparatus further comprises an adding module configured to: in response to a data adding instruction, obtain new data to be added, the new data including a plurality of pairs of key-value data; add the new data to an end of the plurality of pieces of target data in order; and add key data included in the new data to an end of the first column storage file, and adding the value data included in the new data to an end of the second column storage file.

In an alternative implementation, the apparatus further comprises a query module configured to: in response to a data query instruction of an online analytical processing platform, determine a data type of the data query instruction; query position information of key data that match the data type in the first column storage file; and query, based on the position information, data matching the data query instruction in the second column storage file.

In an alternative implementation, when querying, based on the position information, the data matching the data query instruction in the second column storage file, the query module is configured to: retrieve, from the second column storage file, value data matching the position information as the data matching the data query instruction.

In an alternative implementation, the apparatus further comprises an analysis module configured to: perform aggregation analysis on queried data to determine at least one of an occurrence number and an occurrence proportion of each piece of value data in the queried data; and present the at least one of the occurrence number and the occurrence proportion through the online analytical processing platform.

For the processing flow of respective modules in the apparatus, and the interaction between the respective modules, see the related description in the method embodiments for details which are omitted here for brevity.

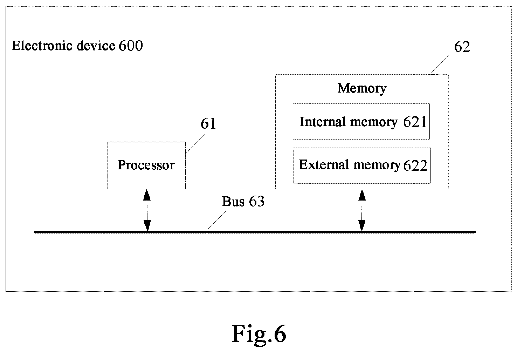

Corresponding to the information storage method in Fig. 3, the embodiments of the present disclosure further provide an electronic device 600. Fig. 6 illustrates a schematic diagram of a structure of the electronic device 600 provided by the embodiments of the present disclosure, including: a processor 61, a memory 62 and a bus 63, where the memory 62 is configured to store executable instructions and includes an internal memory 621 and an external memory 622. Wherein, the internal memory 621 is also referred to as internal storage unit for temporarily storing operation data in the processor 61 and data to be exchanged with the external memory 622 such as a hard disk or the like. The processor 61 can exchange data with the external memory 622 via the internal memory 621. When the electronic device 600 is running, the processor 61 and the memory 62 communicate with each other via the bus 63, to cause the processor to execute instructions of: obtaining a plurality of pieces of target data, the target data including a plurality of pairs of key-value data; generating, based on an order of the plurality of pieces of target data, a first column storage file that stores key data included in each piece of target data; and generating, based on the order of the plurality of pieces of target data, a second column storage file that stores value data included in each piece of target data; wherein first position information of key data of each piece of the target data in the first column storage file is same as second position information of corresponding value data in the second column storage file.

In an alternative implementation, in the instructions executable to the processor 61, generating, based on the order of the plurality of pieces of target data, the first column storage file that stores the key data included in each piece of target data comprises: determining a number of data rows of the first column storage file based on a total number of the plurality of pieces of target data; determining a number of data columns of the first column storage file based on a maximum number of the pairs of key-value data included in a piece of target data among the plurality of pieces of target data; generating the first column storage file based on the number of data rows and the number of data columns of the first column storage file; and storing, based on the order of the plurality of pieces of target data, key data corresponding to each piece of target data sequentially into the first column storage file, such that key data stored in each row in the first column storage file are from a same piece of target data, and each cell in each row stores at most one piece of key data.

In an alternative implementation, in the instructions executed by the processor 61, generating, based on the order of the plurality of pieces of target data, the second column storage file that stores the key data included in each piece of target data comprises: determining a number of data rows of the second column storage file based on a total number of the plurality of pieces of target data; determining a number of data columns of the second column storage file based on a maximum number of the pairs of key-value data included in a piece of target data among the plurality of pieces of target data; generating the second column storage file based on the number of data rows and the number of data columns of the second column storage file; and storing, based on the order of the plurality of pieces of target data, value data corresponding to each piece of target data sequentially into the second column storage file, such that value data stored in each row in the second column storage file is from a same piece of target data, and each cell in each row stores at most one piece of value data.

In an alternative implementation, the instructions executed by the processor 61 further comprise: in response to a data adding instruction, obtaining new data to be added, the new data including a plurality of pairs of key-value data; adding the new data to an end of the order of the plurality of pieces of target data; and adding key data included in the new data to an end of the first column storage file, and adding the value data included in the new data to an end of the second column storage file.

In an alternative implementation, the instructions executed by the processor 61 further comprise: in response to a data query instruction of an online analytical processing platform, determining a data type of the data query instruction; querying position information of key data that match the data type in the first column storage file; and querying, based on the position information, data matching the data query instruction in the second column storage file.

In an alternative implementation, in the instructions executed by the processor 61, querying, based on the position information, the data matching the data query instruction in the second column storage file comprises: retrieving, from the second column storage file, value data matching the position information as the data matching the data query instruction.

In an alternative implementation, the instructions executed by the processor 61 further comprise: performing aggregation analysis on queried data to determine at least one of an occurrence number and an occurrence proportion of each piece of value data in the queried data; and presenting the at least one of the occurrence number and the occurrence proportion through the online analytical processing platform.

The embodiments of the present disclosure further provide a computer readable storage programs stored thereon, where the computer programs, when executed by a processor, perform the steps of the information storage method according to the method embodiments described above. The storage medium may be a transitory or non-transitory computer readable storage medium.

The embodiments of the present disclosure still further provide a computer program product having program code carried thereon, where the instructions included in the program code can be used to perform steps of the information storage method according to the method embodiments described above. See the method embodiments described above for details which are omitted here for brevity.

The computer program product may be implemented by hardware, software or a combination thereof. In an alternative embodiment, the computer program product is instantiated as a computer storage medium. In a further alternative embodiment, the computer program product is instantiated as a software product, for example, a Software Development Kit (SDK) and the like.

As would be fully understood by those skilled in the art, reference could be made to the corresponding process described in the above method embodiments for details of the specific operation process of the system and apparatus, which are omitted here for ease and brevity of the description. In some embodiments provided by the present disclosure, it would be appreciated that the system, apparatus and method disclosed herein could be implemented in other fashion. The apparatus embodiments described above are provided only exemplarily. For example, the division of the units is only a logical function division, which may be a further type of division when implemented in practice. For another example, a plurality of units or components may be combined or may be integrated in a further system, or some features may be omitted or may not be executed. In addition, coupling or direct coupling, or a communication connection, between the components shown or discussed may be implemented via some communication interfaces, and indirect coupling, or a communication connection, may be in an electrical or mechanical form, or other form.

The units described as separate components may, or may not, be physically separated, and components displayed as units may, or may not, be physical units (i.e., they may be located on the same site, or may be distributed over a plurality of network units). Some or all of the units may be chosen, as actually required, to accomplish the objective of the solution according to the embodiments.

In addition, the respective functional units in the embodiments of the present disclosure may be integrated in a processing unit, or the respective units may exist physically separately, or two or more units may be integrated in one unit.

If implemented in the form of software functional units and sold or used as a stand-alone product, the functions could be stored in a non-transitory computer readable storage medium executable by a processor. According to this understanding, the substance of the technical solution according to the present disclosure, or the part thereof making contribution over the prior art or parts of the technical solution, may be embodied in the form of software product, where the computer software product is stored in a storage medium and includes a plurality of instructions to cause a computer device (which may be a personal computer, server, network device, or the like) to perform all or a part of steps of the method according to the embodiments of the present disclosure. The storage medium as described above includes: a U disk, a mobile hard disk, a Read-Only Memory (ROM), a Random Access Memory (RAM), a magnetic or optical disk, and other medium that can store program code.

It should be noted that the above embodiments, only as specific implementations of the present disclosure, are employed to describe the technical solution of the present disclosure, rather than limit the latter, and the protection scope of the present disclosure is not limited thereto. Although the present disclosure has been detailed with reference to the above embodiments, the ordinary skilled in the art would understand that, within the technical range disclosed herein, any one skilled in the art is further allowed to modify the technical solution as recited in the above embodiments, or may easily envision changing the technical solution or making equivalent substitutions for some technical features therein. However, those modifications, changes or substitutions do not cause the substance of the corresponding technical solution to depart from the spirits or scope of the technical solution according to the embodiments of the present disclosure, and should all be covered in the protection scope of the present disclosure. Therefore, the protection scope of the present disclosure should be determined depending on the appended claims.

## Claims

1. A method of information storage, comprising:
obtaining a plurality of pieces of target data, the target data including a plurality of pairs of key-value data;
generating, based on an order of the plurality of pieces of target data, a first column storage file that stores key data included in each piece of target data; and
generating, based on the order of the plurality of pieces of target data, a second column storage file that stores value data included in each piece of target data;
wherein first position information of key data of each piece of the target data in the first column storage file is same as second position information of corresponding value data in the second column storage file.

2. The method of claim 1, wherein generating, based on the order of the plurality of pieces of target data, the first column storage file that stores the key data included in each piece of target data comprises:
determining a number of data rows of the first column storage file based on a total number of the plurality of pieces of target data;
determining a number of data columns of the first column storage file based on a maximum number of the pairs of key-value data included in a piece of target data among the plurality of pieces of target data;
generating the first column storage file based on the number of data rows and the number of data columns; and
storing, based on the order of the plurality of pieces of target data, key data corresponding to each piece of target data sequentially into the first column storage file, such that key data stored in each row in the first column storage file are from a same piece of target data, and each cell in each row stores at most one piece of key data.

3. The method of claim 1 or 2, wherein generating, based on the order of the plurality of pieces of target data, the second column storage file that stores the key data included in each piece of target data comprises:
determining a number of data rows of the second column storage file based on a total number of the plurality of pieces of target data;
determining a number of data columns of the second column storage file based on a maximum number of the pairs of key-value data included in a piece of target data among the plurality of pieces of target data;
generating the second column storage file based on the number of data rows and the number of data columns of the second column storage file; and
storing, based on the order of the plurality of pieces of target data, value data corresponding to each piece of target data sequentially into the second column storage file, such that value data stored in each row in the second column storage file is from a same piece of target data, and each cell in each row stores at most one piece of value data.

4. The method of claim 1, further comprising:
in response to a data adding instruction, obtaining new data to be added, the new data including a plurality of pairs of key-value data;
adding the new data to an end of the plurality of pieces of target data in order; and
adding key data included in the new data to an end of the first column storage file, and adding the value data included in the new data to an end of the second column storage file.

5. The method of claim 1, further comprising:
in response to a data query instruction of an online analytical processing platform, determining a data type of the data query instruction;
querying position information of key data matching the data type in the first column storage file; and
querying, based on the position information, data matching the data query instruction in the second column storage file.

6. The method of claim 5, wherein querying, based on the position information, the data matching the data query instruction in the second column storage file comprises:
retrieving, from the second column storage file, value data matching the position information as the data matching the data query instruction.

7. The method of claim 5 or 6, further comprising:
performing aggregation analysis on queried data to determine at least one of an occurrence number and an occurrence proportion of each piece of value data in the queried data; and
presenting the at least one of the occurrence number and the occurrence proportion through the online analytical processing platform.

8. An information storage apparatus, comprising:
an obtaining module for obtaining a plurality of pieces of target data, the target data including a plurality of pairs of key-value data;
a first generation module for generating, based on an order of the plurality of pieces of target data, a first column storage file that stores key data included in each piece of target data; and
a second generation module for generating, based on the order of the plurality of pieces of target data, a second column storage file that stores value data included in each piece of target data;
wherein first position information of key data of each piece of the target data in the first column storage file is same as second position information of corresponding value data in the second column storage file.

9. An electronic device, comprising: a processor, a memory and a bus, wherein the memory stores machine readable instructions executable by the processor, the processor and the memory communicate with each other via the bus when the electronic device is running, and the machine readable instructions, when executed by the processor, perform the method of any of claims 1-7.

10. A computer readable storage medium having computer programs stored thereon, wherein the computer programs, when executed by a processor, perform steps of the method of any of claims 1-7.

11. A computer program product having program code carried thereon, wherein instructions included in the program code are applicable to perform the method of any of claims 1-7.
